# EUROPEAN PATENT APPLICATION

(11) **EP 4 510 404 A2**
(43) Date of publication of application: **19.02.2025**
(21) Application number: 24182883.9
(22) Date of filing: 18.06.2024
(51) Int. Cl.: H02J 1/10, H02J 7/02

(54) **CHARGING DEVICE AND CONTROL METHOD THEREOF**

(30) Priority: 24.07.2023 CN 202310914865
(71) Applicant: Huawei Digital Power Technologies Co., Ltd., Shenzhen, Guangdong 518043 (CN)
(72) Inventor: LIU, Yifan, Shenzhen, 518043 (CN); YANG, Jin, Shenzhen 518043 (CN); LIU, Jianning, Shenzhen 518043 (CN)
(74) Representative: Isarpatent

(57) **Abstract**

This application provides a charging device and a control method thereof. The charging device includes an AC-DC module, a direct current bus, a DC-DC module, a charging circuit, and a first controller. The charging circuit is connected to the direct current bus, the AC-DC module includes an output capacitor, and the output capacitor is connected to the direct current bus. The AC-DC module is configured to: convert an alternating current output by an alternating current power supply into a direct current and output the direct current to the direct current bus, and the DC-DC module is configured to: obtain the direct current from the direct current bus and perform voltage conversion. The charging circuit is configured to charge, when the charging device is started, the output capacitor of the AC-DC module through the direct current bus. The first controller is configured to: when the charging device is in a standby mode, control the AC-DC module to stop working, control a circuit connection between the AC-DC module and the alternating current power supply to be disconnected, and control a circuit connection between the charging circuit and the alternating current power supply to be disconnected. In this way, standby power consumption of the charging device is greatly reduced.

## Description

### TECHNICAL FIELD

This application relates to the field of charging technologies, and in particular, to a charging device and a control method thereof.

### BACKGROUND

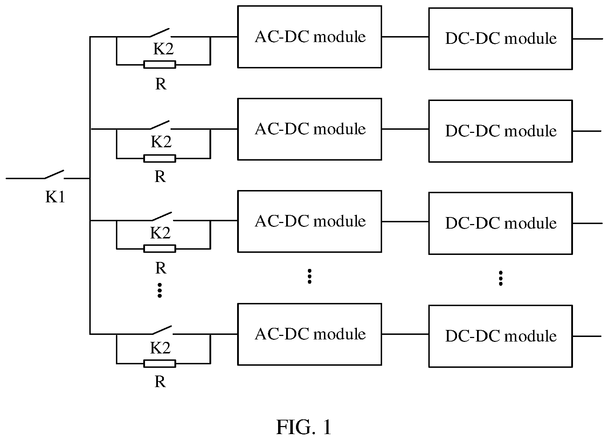

As the demand from an electric vehicle market for charging piles is gradually rising, how to improve charging performance of the charging pile becomes particularly important. As shown in FIG. 1, a charging pile includes a switch K1 and a plurality of charging branches. Each of the plurality of charging branches includes a switch K2, a high-power resistor R, an alternating current (alternating current, AC)-direct current (direct current, DC) module, and a DC-DC module.

When the charging pile is started, in each charging branch, the high-power resistor R is configured to implement current-limiting start of the charging branch, so that a relatively high impulse current can be prevented from being generated in the charging branch when a charging device is started. Therefore, power supply safety and reliability of the charging pile are improved. After the current-limiting start of each charging branch is implemented, the switch K1 and the switch K2 are turned on. In this case, an electric vehicle is charged with an alternating current on which power conversion has been performed by the AC-DC module and the DC-DC module. Therefore, charging performance of the entire charging pile is improved. However, when the charging pile is in a standby mode, the alternating current still flows through the high-power resistor R in each charging branch via the switch K1. As a result, standby power consumption of the charging pile is increased.

### SUMMARY

This application provides a charging device and a control method thereof, to greatly reduce standby power consumption of the charging device.

According to a first aspect, this application provides a charging device, where the charging device includes an AC-DC module, a direct current bus, a DC-DC module, a charging circuit, and a first controller. The charging circuit is connected to the direct current bus, the AC-DC module includes an output capacitor, and the output capacitor is connected to the direct current bus. There may be one or more AC-DC modules, and there may also be one or more DC-DC modules. The AC-DC module is configured to: convert an alternating current output by an alternating current power supply into a direct current and output the direct current to the direct current bus, and the DC-DC module is configured to: obtain the direct current from the direct current bus and perform voltage conversion. The charging circuit is configured to charge, when the charging device is started, the output capacitor of the AC-DC module through the direct current bus. The first controller is configured to: when the charging device is in a standby mode, control the AC-DC module to stop working, control a circuit connection between the AC-DC module and the alternating current power supply to be disconnected, and control a circuit connection between the charging circuit and the alternating current power supply to be disconnected. In this embodiment of this application, the AC-DC module stops working. In other words, the AC-DC module stops outputting the direct current to the direct current bus. In this case, no direct current is input to the DC-DC module through the direct current bus, the DC-DC module and an internal controller of the DC-DC module may stop working, and no power consumption is generated. After the circuit connection between the AC-DC module and the alternating current power supply is disconnected and the circuit connection between the charging circuit and the alternating current power supply is disconnected, no alternating current continues to be input to the AC-DC module and the charging circuit. In this case, the AC-DC module, an internal controller of the AC-DC module, the DC-DC module, the internal controller of the DC-DC module, and the charging circuit may all stop working. In other words, the AC-DC module, the DC-DC module, and the charging circuit may be all in a completely shut-down state, and no power consumption is generated. In this way, standby power consumption of the charging device may be greatly reduced and even close to zero, so that zero power consumption of the device is implemented, and applicability is higher.

With reference to the first aspect, in a possible implementation, the charging device includes a first switch and a second switch, the first switch is disposed between the AC-DC module and the alternating current power supply, and the second switch is disposed between the charging circuit and the alternating current power supply. There may be one or more first switches, and the first switches are in a one-to-one correspondence with the AC-DC modules. The first controller is configured to: when the charging device is in the standby mode, control the first switch to be turned off, to disconnect the circuit connection between the AC-DC module and the alternating current power supply, and control the second switch to be turned off, to disconnect the circuit connection between the charging circuit and the alternating current power supply. In this case, no alternating current continues to be input to the AC-DC module and the charging circuit. Therefore, the AC-DC module, the DC-DC module, and the charging circuit may be in a completely shut-down state. In this way, the standby power consumption of the charging device may be greatly reduced and even close to zero, so that zero power consumption of the device is implemented, and applicability is higher.

With reference to the first aspect, in a possible implementation, the first controller is further configured to control, after the charging circuit charges the output capacitor of the AC-DC module for a period of time, the charging circuit to stop working. Therefore, power consumption of the charging device during normal working is reduced.

With reference to the first aspect, in a possible implementation, the charging device further includes a second controller, and the second controller is configured to control, after the charging circuit charges the output capacitor of the AC-DC module for a period of time, the charging circuit to stop working. Therefore, the power consumption of the charging device during normal working is reduced.

With reference to the first aspect, in a possible implementation, the AC-DC module includes a plurality of switching transistors. The first controller is configured to control, when the charging device is in the standby mode, the plurality of switching transistors to be turned off, to enable the AC-DC module to stop working. In this case, no direct current is input to the DC-DC module through a direct current bus, the DC-DC module and an internal controller of the DC-DC module may stop working, and no power consumption is generated.

According to a second aspect, this application provides a control method for a charging device, where the charging device includes an AC-DC module, a direct current bus, a DC-DC module, and a charging circuit, the charging circuit is connected to the direct current bus, the AC-DC module includes an output capacitor, and the output capacitor is connected to the direct current bus. There may be one or more AC-DC modules, and there may also be one or more DC-DC modules. In the control method, when the charging device is started, the charging circuit charges the output capacitor of the AC-DC module through the direct current bus. When the charging device is in a standby mode, the AC-DC module stops working, a circuit connection between the AC-DC module and an alternating current power supply is disconnected, and a circuit connection between the charging circuit and the alternating current power supply is disconnected. In this embodiment of this application, the AC-DC module stops working. In other words, the AC-DC module stops outputting the direct current to the direct current bus. In this case, no direct current is input to the DC-DC module through the direct current bus, the DC-DC module and an internal controller of the DC-DC module may stop working, and no power consumption is generated. After the circuit connection between the AC-DC module and the alternating current power supply is disconnected and the circuit connection between the charging circuit and the alternating current power supply is disconnected, no alternating current continues to be input to the AC-DC module and the charging circuit. In this case, the AC-DC module, an internal controller of the AC-DC module, the DC-DC module, the internal controller of the DC-DC module, and the charging circuit may all stop working. In other words, the AC-DC module, the DC-DC module, and the charging circuit may be all in a completely shut-down state, and no power consumption is generated. In this way, standby power consumption of the charging device may be greatly reduced and even close to zero, so that zero power consumption of the device is implemented, and applicability is higher.

With reference to the second aspect, in a possible implementation, the charging device includes a first switch and a second switch, the first switch is disposed between the alternating current power supply and the AC-DC module, and the second switch is disposed between the alternating current power supply and the charging circuit. There may be one or more first switches, and the first switches are in a one-to-one correspondence with the AC-DC modules. When the charging device is in the standby mode, the charging device controls the first switch to be turned off, to disconnect the circuit connection between the AC-DC module and the alternating current power supply, and controls the second switch to be turned off, to disconnect the circuit connection between the charging circuit and the alternating current power supply. In this case, no alternating current continues to be input to the AC-DC module and the charging circuit. Therefore, the AC-DC module, the DC-DC module, and the charging circuit may be in a completely shut-down state. In this way, the standby power consumption of the charging device may be greatly reduced and even close to zero, so that zero power consumption of the device is implemented, and applicability is higher.

With reference to the second aspect, in a possible implementation, after the charging circuit charges the output capacitor of the AC-DC module for a period of time, the charging circuit stops working. Therefore, power consumption of the charging device during normal working is reduced.

With reference to the second aspect, in a possible implementation, the AC-DC module includes a plurality of switching transistors. The AC-DC module controls, when the charging device is in the standby mode, the plurality of switching transistors to be turned off, to enable the AC-DC module to stop working. In this case, no direct current is input to the DC-DC module through the direct current bus, the DC-DC module and an internal controller of the DC-DC module may stop working, and no power consumption is generated.

For specific implementations and beneficial effects of the foregoing aspects and the possible implementations of the foregoing aspects, refer to each other.

### BRIEF DESCRIPTION OF DRAWINGS

FIG. 1 is a diagram of a structure of a charging pile in the conventional technology;
FIG. 2 is a diagram of an application scenario of a charging device according to this application;
FIG. 3 is a diagram of a structure of a charging device according to this application;
FIG. 4 is a diagram of another structure of a charging device according to this application;
FIG. 5 is a diagram of another structure of a charging device according to this application;
FIG. 6 is a diagram of another structure of a charging device according to this application; and
FIG. 7 is a schematic flowchart of a control method for a charging device according to this application.

### DESCRIPTION OF EMBODIMENTS

The charging device provided in this application may be applied to fields of electric vehicles, industry, aerospace, and health care, and another field. Specifically, the charging device provided in this application is applicable to high-power power supplies such as a charging pile, a programmable direct current power supply, an industrial power supply, an aerospace space power supply, and a medical power supply, to convert an alternating current into a direct current that is applicable to an electric vehicle, an industrial device, an aerospace device, a medical device, and the like. The charging device provided in this application is applicable to an electric vehicle charging scenario, a high-power charging scenario for a battery, or a high-power charging scenario for another electric device. For example, the electric vehicle charging scenario includes an application scenario in which a charging station that is responsible for and is built by an operator charges the electric vehicle, an application scenario in which a charging station that is built by an automobile enterprise charges the electric vehicle, and a scenario in which a charging station that is built by a third party charges the electric vehicle. The following uses the electric vehicle charging scenario as an example for description.

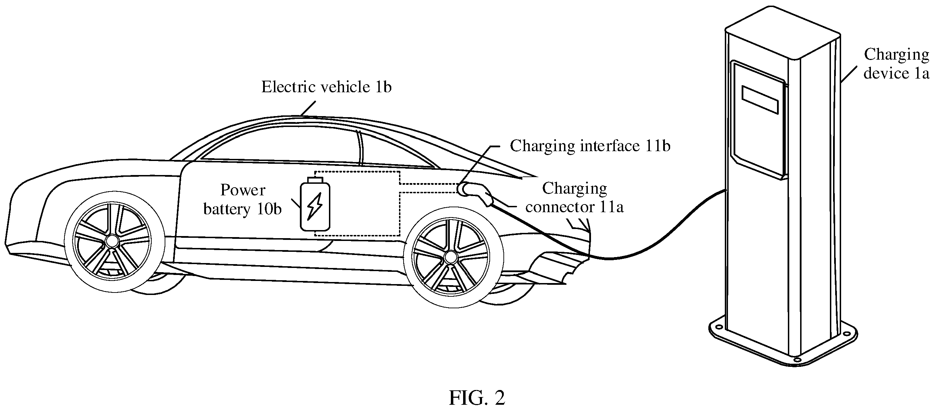

FIG. 2 is a diagram of an application scenario of a charging device according to this application. As shown in FIG. 2, in the electric vehicle charging scenario, a charging device 1a includes a charging connector 11a, and an electric vehicle 1b includes a power battery 10b and a charging interface 1 1b. For example, the charging device 1a is a charging pile. In response to receiving a start signal by the charging device 1a, the charging device 1a is configured to output a direct current through the charging connector 11a. In a process in which the charging device 1a outputs the direct current, a charging circuit is added in the charging device 1a, and the charging circuit has a function of reducing an impulse current of the charging device 1a when the charging device 1a is powered on. Therefore, charging safety and charging reliability of the charging device 1a are improved, and it is ensured that the charging connector 11a can stably output the direct current. When the charging connector 11a is inserted into the charging interface 11b, the charging interface 11b is configured to: receive the direct current output by the charging connector 11a and charge the power battery 10b. Therefore, charging stability of the power battery 10b is improved, and applicability is higher.

The foregoing is merely an example of the application scenario of the charging device provided in this application, but is not exhaustive. The application scenario is not limited in this application.

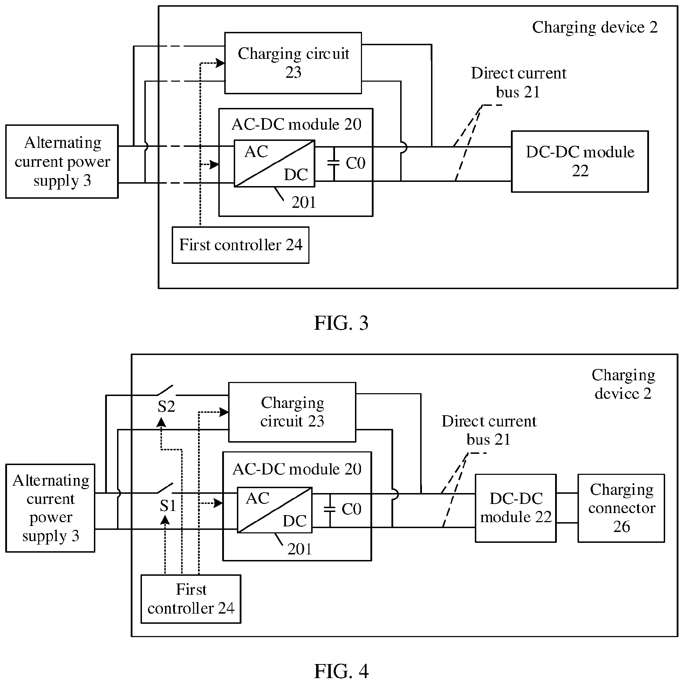

The following describes, by using examples with reference to FIG. 3 to FIG. 6, the charging device and a working principle thereof that are provided in this application.

FIG. 3 is a diagram of a structure of a charging device according to this application. As shown in FIG. 3, the charging device 2 includes an AC-DC module 20, a direct current bus 21, a DC-DC module 22, a charging circuit 23, and a first controller 24. The charging circuit 23 is connected to the direct current bus 21, the AC-DC module 20 includes an output capacitor C0, and the output capacitor C0 is connected to the direct current bus 21. For example, an output end of the charging circuit 23 is connected between a positive direct current bus and a negative direct current bus that are of the direct current bus 21. The output capacitor C0 is connected in parallel between the positive direct current bus and the negative direct current bus that are of the direct current bus 21. An input end of the DC-DC module 22 is connected between the positive direct current bus and the negative direct current bus that are of the direct current bus 21.

The charging circuit 23 is configured to charge, when the charging device 2 is started, the output capacitor C0 of the AC-DC module 20 through the direct current bus 21, so that current-limiting start of the AC-DC module 20 can be implemented. In addition, the charging circuit 23 is further configured to charge an input capacitor of the DC-DC module 22 through the direct current bus 21. Further, the AC-DC module 20 is configured to: convert an alternating current output by an alternating current power supply 3 into a direct current and output the direct current to the direct current bus 21. The DC-DC module 22 is configured to: obtain the direct current from the direct current bus 21 and perform voltage conversion. In a process in which the AC-DC module 20 is powered on and outputs the direct current, an output voltage of the AC-DC module 20 does not instantaneously jump from zero to a highest voltage. Therefore, an impulse current of the AC-DC module 20 when the AC-DC module 20 is powered on is greatly reduced, so that an electronic component inside the AC-DC module 20 can be prevented from being burnt, a service life is prolonged, and safety is higher.

The first controller 24 is configured to: when the charging device 2 is in a standby mode, control the AC-DC module 20 to stop working, control a circuit connection between the AC-DC module 20 and the alternating current power supply 3 to be disconnected, and control a circuit connection between the charging circuit 23 and the alternating current power supply 3 to be disconnected. In this embodiment of this application, the AC-DC module 20 stops working. In other words, the AC-DC module 20 stops outputting the direct current to the direct current bus 21. In this case, no direct current is input to the DC-DC module 22 through the direct current bus 21, the DC-DC module 22 and an internal controller of the DC-DC module 22 may stop working, and no power consumption is generated. After the circuit connection between the AC-DC module 20 and the alternating current power supply 3 is disconnected and the circuit connection between the charging circuit 23 and the alternating current power supply 3 is disconnected, no alternating current continues to be input to the AC-DC module 20 and the charging circuit 23. In this case, the AC-DC module 20, an internal controller of the AC-DC module 20, the DC-DC module 22, the internal controller of the DC-DC module 22, and the charging circuit 23 may all stop working. In other words, the AC-DC module 20, the DC-DC module 22, and the charging circuit 23 may be all in a completely shut-down state. In this way, standby power consumption of the charging device 2 is greatly reduced, and the standby power consumption of the charging device 2 may even be close to zero, so that zero power consumption of the device is implemented, and applicability is higher.

In some feasible implementations, the first controller 24 may be any one of or a combination of a plurality of controllers in the internal controller of the AC-DC module 20, a second controller connected to the charging circuit 23, and a host controller of the charging device 2. A control manner is more flexible. This is not specifically limited herein. When the first controller 24 is the internal controller of the AC-DC module 20 or the second controller, there is no need to rely on the host controller for control, and applicability is higher. For example, when the charging device 2 is a charging pile, the host controller is a main control board of the charging pile, and a power supply of the main control board is used for power supply. In addition, when the any one of the internal controller of the AC-DC module 20, the second controller, and the host controller stops working, a controller other than the any one of the internal controller of the AC-DC module 20, the second controller, and the host controller may replace the any controller to work.

In some feasible implementations, as shown in FIG. 3, the AC-DC module 20 further includes an AC-DC circuit 201, and the AC-DC circuit 201 includes a plurality of switching transistors. The first controller 24 is configured to control the plurality of switching transistors to be turned on or turned off, to enable the AC-DC module 20 to work or stop working.

In some feasible implementations, as shown in FIG. 4, the charging device 2 shown in FIG. 3 further includes a first switch S1 and a second switch S2. For example, each of the first switch S1 and the second switch S2 may be one of a relay, a contactor, and a semiconductor bidirectional switch. In addition, the first switch S1 and the second switch S2 may be switches of a same type, or may be switches of different types. This is not specifically limited herein. The first switch S 1 is disposed between the AC-DC module 20 and the alternating current power supply 3, and the second switch S2 is disposed between the charging circuit 23 and the alternating current power supply 3. For example, the first switch S1 is disposed between an input end of the AC-DC module 20 and the alternating current power supply 3, and the second switch S2 is disposed between an input end of the charging circuit 23 and the alternating current power supply 3. Optionally, an alternating current power supply connected to the first switch S1 and an alternating current power supply connected to the second switch S2 may be a same alternating current power supply, or may be different alternating current power supplies. The first switch S1 may be disposed outside the AC-DC module 20, or the first switch S1 may be integrated in the AC-DC module 20. This is not specifically limited herein.

The following describes a start process of the charging device 2 by using an example with reference to FIG. 4.

When the charging device 2 is started, the first controller 24 is configured to receive a start signal in response to an operation of triggering a start button on a device start interface. For example, when the charging device 2 is a charging pile, the device start interface is a display interface that includes the start button and that is on a display of the charging pile. Further, the first controller 24 is configured to control, when receiving the start signal, the second switch S2 to be turned on, to enable the circuit connection between the charging circuit 23 and the alternating current power supply 3 to be connected. In this case, the charging circuit 23 may receive an alternating current output by the alternating current power supply 3. For example, the first controller 24 may be a host controller. In this case, the charging circuit 23 is configured to charge the output capacitor C0. When the charging circuit 23 is a charging circuit with a soft-start function, the charging circuit 23 may charge the output capacitor C0 with a low current, so that voltages at two ends of the output capacitor C0 slowly increase from zero.

Further, the first controller 24 is configured to control, when the voltages at the two ends of the output capacitor C0 are greater than or equal to a first voltage threshold, the first switch S1 to be turned on, to enable the circuit connection between the AC-DC module 20 and the alternating current power supply 3 to be connected. In this way, an output voltage of the AC-DC module 20 is prevented from instantaneously jumping from zero to a highest voltage. Therefore, an impulse current of the AC-DC module 20 when the AC-DC module 20 is powered on is greatly reduced, so that an electronic component inside the AC-DC module 20 and the first switch S1 can be prevented from being burnt, a service life is prolonged, and safety is higher. For example, the first controller 24 may be any one of the internal controller of the AC-DC module 20, the second controller connected to the charging circuit 23, and the host controller. When the first controller 24 is the internal controller of the AC-DC module 20, wiring between the AC-DC module 20 and the first switch S1 is simpler, and costs are lower. The first voltage threshold may be a turn-on voltage value configured for the first switch S1 by a user, or may be a turn-on voltage value configured for the first switch S 1 before delivery.

Still further, the first controller 24 is configured to control, based on a drive signal, a plurality of switching transistors of the AC-DC module 20 to be turned on or turned off, to enable the AC-DC module 20 to convert an alternating current into a direct current and output the direct current to a direct current bus 21. For example, the first controller 24 may be the internal controller of the AC-DC module 20. A DC-DC module 22 is configured to: obtain the direct current from the direct current bus 21, convert the direct current into a target direct current, and output the target direct current to a charging connector 26. In this case, the charging connector 26 is configured to charge an electric device based on the target direct current. Charging safety is higher. For example, the electric device may be an electrical device.

In some feasible implementations, when the AC-DC module 20 and the charging circuit 23 share a same first controller 24 for control, a specific structure of the charging device 2 is shown in FIG. 4. The first controller 24 is further configured to control, after the charging circuit 23 charges the output capacitor C0 of the AC-DC module 20 for a period of time, the charging circuit 23 to stop working, to reduce power consumption of the charging device 2 during normal working. In a specific implementation, the first controller 24 is further configured to control, after the charging circuit 23 charges the output capacitor C0 for the period of time, a plurality of switching transistors of the charging circuit 23 to be turned off, to enable the charging circuit 23 to stop working. The period of time may be a charging time period used by the charging circuit 23 when the voltages at the two ends of the output capacitor C0 reach a second voltage threshold. The second voltage threshold is greater than or equal to the first voltage threshold. In this case, the second switch S2 may continue to remain in a turn-on state, or the first controller 24 may control the second switch S2 to be turned off. This is not specifically limited herein. The first controller 24 in this implementation may be the any one of the internal controller of the AC-DC module 20, the second controller, and the host controller.

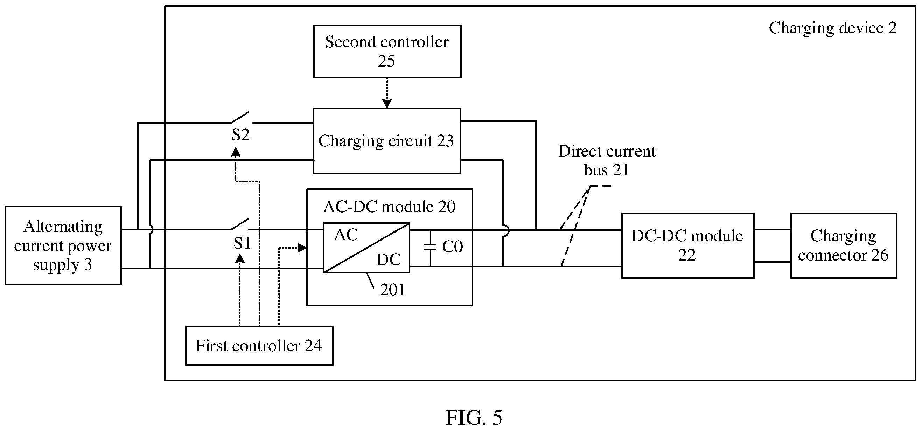

In some feasible implementations, when the AC-DC module 20 and the charging circuit 23 are controlled by using different controllers, the specific structure of the charging device 2 is shown in FIG. 5. The charging device 2 shown in FIG. 3 further includes a second controller 25. The second controller 25 may be a controller configured to control the charging circuit 23 to work or stop working. The charging circuit 23 and the second controller 25 are separately disposed, or the charging circuit 23 and the second controller 25 are integrated into a charging module. The second controller 25 is configured to control, after the charging circuit 23 charges the output capacitor C0 of the AC-DC module 20 for the period of time, the charging circuit 23 to stop working, to reduce the power consumption of the charging device 2 during normal working. In a specific implementation, the first controller 24 is further configured to control, after the charging circuit 23 charges the output capacitor C0 for the period of time, the plurality of switching transistors of the charging circuit 23 to be turned off, to enable the charging circuit 23 to stop working. The period of time may be the charging time period used by the charging circuit 23 when the voltages at the two ends of the output capacitor C0 reach the second voltage threshold. The second voltage threshold is greater than or equal to the first voltage threshold. The first controller 24 in this implementation may be the internal controller of the AC-DC module 20 or the host controller.

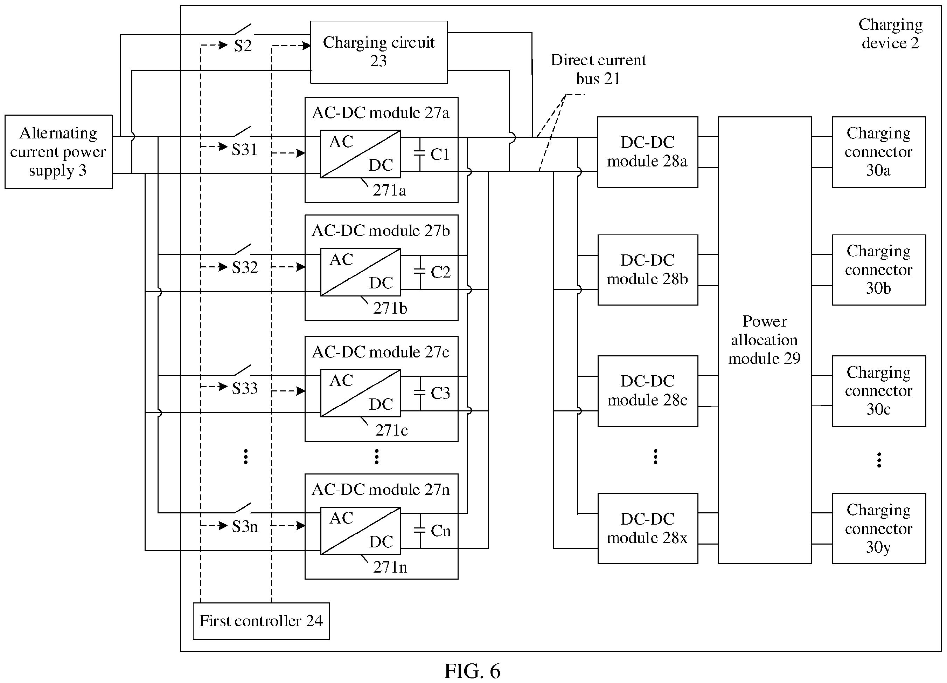

In some feasible implementations, there may be a plurality of AC-DC modules, a plurality of DC-DC modules, and a plurality of first switches in the charging device 2. Specifically, as shown in FIG. 6, the charging device 2 includes an AC-DC module 27a to an AC-DC module 27n, a first switch S31 to a first switch S3n, a DC-DC module 28a to a DC-DC module 28x, a power allocation module 29, and a charging connector 30a to a charging connector 30y. The AC-DC module 27a to the AC-DC module 27n are in a one-to-one correspondence with the first switch S31 to the first switch S3n. Each of the first switch S31 to the first switch S3n is disposed between the alternating current power supply 3 and an AC-DC module corresponding to each first switch. For example, the first switch S31 is disposed between the alternating current power supply 3 and an input end of the AC-DC module 27a corresponding to the first switch S31, the first switch S32 is disposed between the alternating current power supply 3 and an input end of the AC-DC module 27b corresponding to the first switch S32, the first switch S33 is disposed between the alternating current power supply 3 and an input end of the AC-DC module 27c corresponding to the first switch S33, ..., and the first switch S3n is disposed between the alternating current power supply 3 and an input end of the AC-DC module 27n corresponding to the first switch S3n.

Each of the AC-DC module 27a to the AC-DC module 27n includes an AC-DC circuit and an output capacitor, the AC-DC circuit includes a plurality of switching transistors, and the output capacitor of each of the AC-DC modules is connected between a positive direct current bus and a negative direct current bus in the direct current bus 21. For example, the AC-DC module 27a includes an AC-DC circuit 271a and an output capacitor C1, where the output capacitor C1 is connected between a positive direct current bus and a negative direct current bus; the AC-DC module 27b includes an AC-DC circuit 271b and an output capacitor C2, where the output capacitor C2 is connected between a positive direct current bus and a negative direct current bus; the AC-DC module 27c includes an AC-DC circuit 271c and an output capacitor C3, where the output capacitor C3 is connected between a positive direct current bus and a negative direct current bus; ...; and the AC-DC module 27n includes an AC-DC circuit 271n and an output capacitor Cn, where the output capacitor Cn is connected between a positive direct current bus and a negative direct current bus. The direct current bus 21 is connected to an input end of each of the DC-DC module 28a to the DC-DC module 28x, an output end of each DC-DC module is connected to an input end of the power allocation module 29, and an output end of the power allocation module 29 is connected to each of the charging connector 30a to the charging connector 30y.

In some feasible implementations, each of the first switch S31 to the first switch S3n may be disposed outside a corresponding AC-DC module, or each of the first switches may be integrated inside the corresponding AC-DC module. This is not specifically limited herein.

In some feasible implementations, each of the first switch S31 to the first switch S3n may be one of a relay, a contactor, and a semiconductor bidirectional switch. In addition, switch types of each of the first switches and the second switch S2 may be the same or may be different.

In some feasible implementations, the first controller 24 may be any type of controller of or a combination of a plurality of types of controllers in a combination of an internal controller of each of the AC-DC module 27a to the AC-DC module 27n, the second controller 25, and the host controller of the charging device 2. This is not specifically limited herein. For example, when the first controller 24 is the combination of the internal controller of each of the AC-DC modules or the second controller 25, there is no need to rely on the host controller for control, and applicability is higher. In addition, when the any type of controller of the internal controller of each of the AC-DC modules, the second controller 25, and the host controller stops working, a type of controller other than the any type of controller of the internal controller of each of the AC-DC modules, the second controller, and the host controller may replace the any type of controller to work.

The following describes a start process of the charging device 2 by using an example with reference to FIG. 6.

The first controller 24 is configured to control, when receiving the start signal, the second switch S2 to be turned on, to enable the circuit connection between the charging circuit 23 and the alternating current power supply 3 to be connected. For example, the first controller 24 may be the host controller. In this case, the charging circuit 23 may receive the alternating current provided by the alternating current power supply 3, and charge, with a low current, an output capacitor of each of the AC-DC module 27a to the AC-DC module 27n through a direct current bus 21, so that voltages at two ends of the output capacitor of each of the AC-DC modules slowly increase from zero, and there is no need to separately configure a charging circuit for each of the AC-DC modules for charging. Therefore, integration level is higher and costs are lower.

Further, the first controller 24 is configured to control, when the voltages at the two ends of the output capacitor of each of the AC-DC modules is greater than or equal to a first voltage threshold, a first switch corresponding to each of the AC-DC modules to be turned on, to enable a circuit connection between each of the AC-DC modules and the alternating current power supply 3 to be connected. In this way, an output voltage of each of the AC-DC modules is prevented from instantaneously jumping from zero to a highest voltage. Therefore, an impulse current of each of the AC-DC modules when each of the AC-DC modules is powered on is greatly reduced, so that an electronic component inside each of the AC-DC modules and the first switch corresponding to each of the AC-DC modules from being burnt, a service life is prolonged, and safety is higher. For example, the first controller 24 may be any type of controller of a combination of an internal controller of each of the AC-DC modules, a second controller connected to the charging circuit 23, and the host controller. When the first controller 24 is the combination of the internal controller of each of the AC-DC modules, wiring between each of the AC-DC modules and the first switch corresponding to each of the AC-DC modules is simpler, and costs are lower. The first voltage threshold may be a turn-on voltage value configured for the first switch by a user, or may be a turn-on voltage value configured for the first switch before delivery. In addition, the first switch corresponding to each of the AC-DC modules independently conducts the circuit connection between each of the AC-DC modules and the alternating current power supply 3, instead of instantaneously conducting connections between all of the AC-DC modules and the alternating current power supply 3 by using one first switch. Therefore, power levels of the first switch S31 to the first switch S3n are reduced, and costs are lower.

Further, the first controller 24 is configured to control, based on a drive signal, a plurality of switching transistors of each of the AC-DC modules to be turned on or turned off, to enable each of the AC-DC modules to convert an alternating current into a direct current and output the direct current to the direct current bus 21. For example, the first controller 24 may be the combination of the internal controller of each of the AC-DC modules, and the internal controller of each of the AC-DC modules controls, based on the drive signal, the plurality of switching transistors of each of the AC-DC modules to be turned on or turned off. In this case, the AC-DC module 27a to the AC-DC module 27n share the same direct current bus 21 to output the direct current, so that power sharing among the AC-DC module 27a to the AC-DC module 27n can be implemented. Therefore, energy can be efficiently provided for the charging connector 30a to the charging connector 30y. Each of the DC-DC module 28a to the DC-DC module 28x is configured to: obtain the direct current from the direct current bus 21, perform voltage conversion to obtain a target direct current, and output the target direct current to the power allocation module 29.

Still further, the power allocation module 29 is configured to: determine at least one target DC-DC module from the DC-DC module 28a to the DC-DC module 28x based on power required by each of the charging connector 30a to the charging connector 30y, and allocate, to each of the charging connectors, a target direct current output by each of the at least one target DC-DC module, so that each of the charging connectors charges an electric device to which each of the charging connectors is connected. In a specific implementation, when the power allocation module 29 performs power allocation by using a power allocation matrix, the power allocation module 29 is configured to determine the at least one target DC-DC module from the DC-DC module 28a to the DC-DC module 28x based on the power required by each of the charging connectors and output power of each of the DC-DC modules. Total output power of the at least one target DC-DC module is the same as the power required by each of the charging connectors.

Charging flexibility and charging efficiency of the charging device 2 can be improved by implementing this embodiment of this application.

In some feasible implementations, when each of the AC-DC modules and the charging circuit 23 are controlled by using a same first controller 24, the first controller 24 is further configured to control, after the charging circuit 23 charges the output capacitor of each of the AC-DC modules for a period of time, the charging circuit 23 to stop working, to reduce power consumption of the charging device 2 during normal working. The period of time may be a charging time period used by the charging circuit 23 when the voltages at the two ends of the output capacitor of each of the AC-DC modules reach a second voltage threshold. The second voltage threshold is greater than or equal to the first voltage threshold. In this case, the second switch S2 may continue to remain in a turn-on state, or the first controller 24 may control the second switch S2 to be turned off. This is not specifically limited herein. The first controller 24 in this implementation may be the any type of controller of the combination of the internal controller of each of the AC-DC modules, the second controller 25, and the host controller.

In some feasible implementations, when each of the AC-DC modules and the charging circuit 23 are controlled by using different controllers, the second controller 25 is configured to control, after the charging circuit 23 charges the output capacitor of each of the AC-DC modules for the period of time, the charging circuit 23 to stop working, to reduce the power consumption of the charging device 2 during normal working. The period of time may be the charging time period used by the charging circuit 23 when the voltages at the two ends of the output capacitor of each of the AC-DC modules reach the second voltage threshold. The second voltage threshold is greater than or equal to the first voltage threshold. The first controller 24 in this implementation may be the combination of the internal controller of each of the AC-DC modules or the host controller.

The following describes a standby process of a charging device 2 by using an example in which the charging device 2 works normally and a second switch S2 remains in a turn-on state.

In some feasible implementations, there may be one AC-DC module, one DC-DC module, and one first switch in the charging device 2, which is specifically shown in FIG. 4. When the charging device 2 is in a standby mode, a first controller 24 is configured to control a plurality of switching transistors of the AC-DC module 20 to be turned off, to enable the AC-DC module 20 to stop working. During specific implementation, the first controller 24 is configured to control, when a duration during which a charging connector 26 does not charge an electric device reaches a preset duration threshold or in response to an operation of triggering a standby button on a device standby interface, the plurality of switching transistors of the AC-DC module 20 to be turned off, to enable the AC-DC module 20 to stop working. In this case, no direct current is input to the DC-DC module 22 through a direct current bus 21, the DC-DC module 22 and an internal controller of the DC-DC module 22 may stop working, and no power consumption is generated. Optionally, the internal controller of the DC-DC module 22 may also control the plurality of switching transistors of the DC-DC module 22 to be turned off. For example, the first controller 24 may be an internal controller of the AC-DC module 20. When the charging device 2 is a charging pile, the device standby interface is a display interface that includes the standby button and that is on a display of the charging pile. The preset duration threshold may be a preset value, or may be a value determined based on a component used in the charging device 2.

Further, in response to a case in which the AC-DC module 20 stops working, the first controller 24 is configured to control the first switch S1 to be turned off, to disconnect a circuit connection between the AC-DC module 20 and an alternating current power supply 3. Therefore, the first switch S1 can be prevented from being directly turned off when a relatively high current passes through the first switch S1. After the first switch S1 is turned off, the first controller 24 is configured to control the second switch S2 to be turned off, to disconnect a circuit connection between a charging circuit 23 and the alternating current power supply 3. For example, the first controller 24 may be any one of an internal controller of the AC-DC module 20, the second controller 25, and a host controller. In this case, no alternating current continues to be input to the AC-DC module 20 and the charging circuit 23. Therefore, the AC-DC module 20, the DC-DC module 22, and the charging circuit 23 may be in a completely shut-down state, no power consumption is generated, and only the host controller consumes energy. In this way, standby power consumption of the charging device 2 is greatly reduced, and the standby power consumption of the charging device 2 may even be close to zero, so that zero power consumption of the device is implemented, and applicability is higher.

In some feasible implementations, there may be a plurality of AC-DC modules, a plurality of DC-DC modules, and a plurality of first switches in the charging device 2, which is specifically shown in FIG. 6. When the charging device 2 is in the standby mode, the first controller 24 is configured to control a plurality of switching transistors of each of the AC-DC modules to be turned off, to enable each of the AC-DC modules to stop working. For example, the first controller 24 may be a combination of an internal controller of each of the AC-DC modules 20, and the internal controller of each of the AC-DC modules controls the plurality of switching transistors of each of the AC-DC modules to be turned off. In this case, no direct current is input to each of the DC-DC module 28a to the DC-DC module 28x through the direct current bus 21. Therefore, all of the DC-DC modules and the internal controllers of the DC-DC modules may stop working, and no power consumption is generated. Optionally, the internal controller of each of the DC-DC modules may also control the plurality of switching transistors of each of the DC-DC modules to be turned off. The preset duration threshold may be the preset value, or may be the value determined based on the component used in the charging device 2.

Further, in response to a case in which each of the AC-DC modules stops working, the first controller 24 is configured to control a first switch corresponding to each of the AC-DC modules to be turned off, to disconnect a circuit connection between each of the AC-DC modules and an alternating current power supply 3. Therefore, the first switch can be prevented from being directly turned off when the relatively high current passes through the first switch. After the first switch corresponding to each of the AC-DC modules is turned off, the first controller 24 is configured to control the second switch S2 to be turned off, to disconnect the circuit connection between the charging circuit 23 and the alternating current power supply 3. For example, the first controller 24 may be any type of controller of the combination of the internal controller of each of the AC-DC modules, the second controller 25, and the host controller. When the first controller 24 is the combination of the internal controller of each of the AC-DC modules, the internal controller of each of the AC-DC modules control the first switch corresponding to each of the AC-DC modules to be turned off, and the internal controller of any of the AC-DC module 27a to the AC-DC module 27n controls the second switch S2 to be turned off. For example, the any AC-DC module may be an AC-DC module closest to the second switch S2. In this case, no alternating current continues to be input to each of the AC-DC modules and the charging circuit 23. Therefore, all of the AC-DC modules, all of the DC-DC modules, and the charging circuit 23 may be in a completely shut-down state, no power consumption is generated, and only the host controller consumes energy. In this way, the standby power consumption of the charging device 2 is greatly reduced, and the standby power consumption of the charging device 2 may even be close to zero, so that zero power consumption of the device is implemented, and applicability is higher.

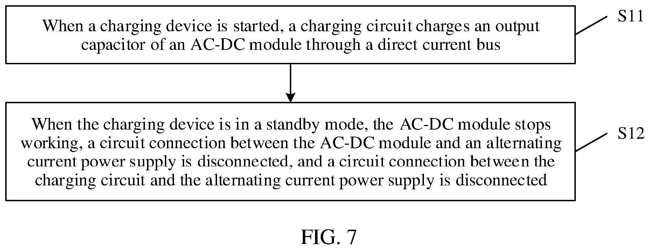

FIG. 7 is a schematic flowchart of a control method for a charging device according to this application. The charging device includes an AC-DC module, a direct current bus, a DC-DC module, and a charging circuit. The charging circuit is connected to the direct current bus, the AC-DC module includes an output capacitor, and the output capacitor is connected to the direct current bus. There may be one or more AC-DC modules, and there may also be one or more DC-DC modules. As shown in FIG. 7, the control method includes the following steps S11 to S12.

Step S11: When the charging device is started, the charging circuit charges the output capacitor of the AC-DC module through the direct current bus.

In some feasible implementations, after the charging circuit charges the output capacitor of the AC-DC module for a period of time, the charging circuit stops working. Therefore, power consumption of the charging device during normal working is reduced. The period of time may be a charging time period used by the charging circuit when voltages at two ends of the output capacitor of the AC-DC module reach a specific voltage threshold (for example, the foregoing second voltage threshold).

Step S12: When the charging device is in a standby mode, the AC-DC module stops working, a circuit connection between the AC-DC module and an alternating current power supply is disconnected, and a circuit connection between the charging circuit and the alternating current power supply is disconnected.

In some feasible implementations, the AC-DC module includes a plurality of switching transistors. The AC-DC module controls, when the charging device is in the standby mode, the plurality of switching transistors to be turned off, to enable the AC-DC module to stop working. In this case, no direct current is input to the DC-DC module through the direct current bus, the DC-DC module and an internal controller of the DC-DC module may stop working, and no power consumption is generated.

In some feasible implementations, the charging device includes a first switch and a second switch. The first switch is disposed between the alternating current power supply and the AC-DC module, and the second switch is disposed between the alternating current power supply and the charging circuit. There may be one or more first switches, and the first switches are in a one-to-one correspondence with the AC-DC modules. When the charging device is in the standby mode, the charging device controls the first switch to be turned off, to disconnect the circuit connection between the AC-DC module and the alternating current power supply, and controls the second switch to be turned off, to disconnect the circuit connection between the charging circuit and the alternating current power supply. In this case, no alternating current continues to be input to the AC-DC module and the charging circuit. Therefore, the AC-DC module, the DC-DC module, and the charging circuit may be in a completely shut-down state, and no power consumption is generated. In this way, standby power consumption of the charging device may be greatly reduced and even close to zero, so that zero power consumption of the device is implemented, and applicability is higher.

During specific implementation, for a specific execution manner and beneficial effects of the control method for the charging device, refer to embodiments corresponding to FIG. 3 to FIG. 6. Details are not described herein again.

It should be noted that, the terms "first" and "second" are merely intended for a purpose of description, and cannot be understood as indicating or implying relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A charging device, comprising an AC-DC module, a direct current bus, a DC-DC module, a charging circuit, and a first controller, wherein the charging circuit is connected to the direct current bus, the AC-DC module comprises an output capacitor, and the output capacitor is connected to the direct current bus;
the AC-DC module is configured to: convert an alternating current output by an alternating current power supply into a direct current and output the direct current to the direct current bus, and the DC-DC module is configured to: obtain the direct current from the direct current bus and perform voltage conversion;
the charging circuit is configured to charge, when the charging device is started, the output capacitor of the AC-DC module through the direct current bus; and
the first controller is configured to: when the charging device is in a standby mode, control the AC-DC module to stop working, control a circuit connection between the AC-DC module and the alternating current power supply to be disconnected, and control a circuit connection between the charging circuit and the alternating current power supply to be disconnected.

2. The charging device according to claim 1, wherein the charging device comprises a first switch and a second switch, the first switch is disposed between the alternating current power supply and the AC-DC module, and the second switch is disposed between the alternating current power supply and the charging circuit; and
the first controller is configured to: when the charging device is in the standby mode, control the first switch to be turned off, to disconnect the circuit connection between the AC-DC module and the alternating current power supply, and control the second switch to be turned off, to disconnect the circuit connection between the charging circuit and the alternating current power supply.

3. The charging device according to claim 1 or 2, wherein the first controller is further configured to control, after the charging circuit charges the output capacitor of the AC-DC module for a period of time, the charging circuit to stop working.

4. The charging device according to claim 1 or 2, wherein the charging device further comprises a second controller, and the second controller is configured to control, after the charging circuit charges the output capacitor of the AC-DC module for a period of time, the charging circuit to stop working.

5. The charging device according to any one of claims 1 to 4, wherein the AC-DC module comprises a plurality of switching transistors, and the first controller is configured to control the plurality of switching transistors to be turned off, to enable the AC-DC module to stop working.

6. A control method for a charging device, wherein the charging device comprises an AC-DC module, a direct current bus, a DC-DC module, and a charging circuit, the charging circuit is connected to the direct current bus, the AC-DC module comprises an output capacitor, and the output capacitor is connected to the direct current bus; and
the method comprises:
when the charging device is started, charging, by the charging circuit, the output capacitor of the AC-DC module through the direct current bus; and
when the charging device is in a standby mode, stopping, by the AC-DC module, working, wherein a circuit connection between the AC-DC module and an alternating current power supply is disconnected, and a circuit connection between the charging circuit and the alternating current power supply is disconnected.

7. The control method according to claim 6, wherein the charging device comprises a first switch and a second switch, the first switch is disposed between the alternating current power supply and the AC-DC module, and the second switch is disposed between the alternating current power supply and the charging circuit; and the method further comprises:
when the charging device is in the standby mode, controlling, by the charging device, the first switch to be turned off, to disconnect the circuit connection between the AC-DC module and the alternating current power supply, and controlling the second switch to be turned off, to disconnect the circuit connection between the charging circuit and the alternating current power supply.

8. The control method according to claim 6 or 7, wherein the method further comprises: after the charging circuit charges the output capacitor of the AC-DC module for a period of time, stopping, by the charging circuit, working.

9. The control method according to claim 7 or 8, wherein the AC-DC module comprises a plurality of switching transistors, and the method further comprises: controlling, by the AC-DC module, the plurality of switching transistors to be turned off, to enable the AC-DC module to stop working.
